# EUROPEAN PATENT APPLICATION

(11) **EP 4 682 840 A1**
(43) Date of publication of application: **21.01.2026**
(21) Application number: 24189181.1
(22) Date of filing: 17.07.2024
(51) Int. Cl.: G06V 10/774, G06V 40/20

(54) **LABEL GENERATION FOR HUMAN ACTIVITY RECOGNITION**

(71) Applicant: Infineon Technologies AG, 85579 Neubiberg (DE)
(72) Inventor: FUSCO, Alessandra, 81541 Munich (DE); GÜVEN, Baturalp, 80935 Munich (DE); LAVRONENKO, Kostiantyn, 52074 Aachen (DE); SAKHAROV, Sviatoslav, 52068 Aachen (DE)
(74) Representative: Kraus & Lederer PartGmbB

(57) **Abstract**

Video data (121, 122, 123) depicting a human body or body part is obtained. Based on the video data, a time-resolved reduced graph representation (190) of the human body a body part is generated. Based on the time-resolved reduced graph representation, a label (129) associated with an activity of the human body or body part is determined. Such labels can be used to populate a training dataset that can later on be used for training a machine-learning model, e.g., for gesture classification, fall detection, or other tasks, based on sensor data that observes the human body or body part.

## Description

### TECHNICAL FIELD

Various examples of the disclosure generally pertain to label generation for populating a training dataset that is used for subsequent training of a machine-learning model. The machine-learning model is trained to carry out human-activity recognition tasks.

### BACKGROUND

Machine-learning models have become a widespread tool for recognizing human activities, a field commonly referred to as Human Activity Recognition (HAR). Here, machine-learning models are trained to recognize and optionally classify human activities using sensor data. Vision-based sensors, such as cameras, and non-vision-based sensors, like accelerometers or gyroscopes, are examples of the sensor modalities employed in HAR.

The applications of HAR are numerous. For instance, fall detection is a critical aspect of healthcare, enabling timely interventions. Gesture detection and classification are used for human-computer interaction.

The level of customization required for different HAR use cases necessitates the collection of new data to train the machine-learning models for diverse mounting positions, installation spaces, or novel activities. To obtain such training data samples, reliable labeling of sensor data poses a substantial challenge. The quality of labels has a direct impact on the performance of machine-learning models. Manual annotation and label generation are time consuming, costly, and error prone.

### SUMMARY

Accordingly, it is an object of the present disclosure to provide advanced techniques for HAR. In particular, it is an object of the present disclosure to enable accurate training of machine-learning models configured for carrying out a HAR task. It is an objective to provide better labeling techniques, thereby overcoming the above-mentioned disadvantages of the prior art at least in part.

This need is met by the features of the independent claims. The features of the dependent claims define embodiments.

A computer-implemented method is disclosed. The method includes obtaining video data depicting a human body or body part during a time interval. The video data is used to generate a time-resolved reduced graph representation of the human body or body part during the time interval. This time-resolved reduced graph representation is used by one or more machine-learning models to generate a label. The label is associated with an activity of the human body or body part, i.e., it may be indicative of whether the activity is present or absent, may be indicative of the type of the activity, etc. Sensor data observing the human body or body part during the time interval is obtained. The method includes storing, in a training dataset for training a further machine-learning model, an input-output data pair comprising the sensor data as input and the label as output.

Furthermore, a computing device configured for implementing such method is disclosed.

### BRIEF DESCRIPTION OF THE DRAWINGS

FIG. 1 is a flowchart of a method according to various examples.
FIG. 2 is a flowchart of a method according to various examples.
FIG. 3 schematically illustrates a processing pipeline according to various examples.
FIG. 4 schematically illustrates a machine-learning model for generating a label based on time-resolved reduced graph representation.
FIG. 5 schematically illustrates details with respect to the machine-learning model of FIG. 4.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, HAR techniques are disclosed. Various HAR use cases can benefit from the techniques disclosed herein, including but not limited to: multi-class classification; fall detection, gesture detection, gesture classification, e.g., single class / binary class classification, or multi class classification; seating posture monitoring; physical exercise monitoring; etc. It should be noted that "activity" does not imply that a certain type of activity of particular significant motion or dynamics is present, e.g., that a fall is present. Activity may also correspond to the case in which that type of activity is not present, i.e., no fall (i.e., the human stands upright) or no gesture (i.e., the hand rests).

Depending on the particular HAR use case, different body parts - or even the entire body - may be monitored. Some examples are listed in TAB. 1 - however, other variants are possible.

**TAB. 1: some examples of monitored body parts for various HAR use cases.**

| | |
|---|---|
| HAR Use Case | Monitored Body or Body Parts |
| Fall Detection | Entire body (to capture overall movement and orientation changes) |
| Gesture Detection or classification | Hands, arms, or fingers |
| Seating Posture Monitoring | Back, hips |
| Physical Exercise Monitoring | Depending on exercise: legs, arms, back, chest |

The disclosed HAR techniques employ a machine-learning model to recognize the human activity. The machine-learning model used to solve the HAR task is, hereinafter, referred to as HAR machine-learning model. For instance, a deep neural network may be used as HAR machine-learning model. Other implementations are also conceivable.

Various sensor modalities can be used to provide sensor data based on which the HAR machine-learning model is inferred to solve the respective HAR task. Example sensor modalities include: non-vision sensor modalities; radar sensing; ultrasound sensing; audio sensing; vibration or shock sensing; acceleration sensing; etc.

The HAR machine-learning model can be a single-modality machine-learning model or a multi-modality machine-learning model. In a single-modality machine-learning model the input to the HAR machine-learning model is based on a single sensor modality, such as either audio or acceleration data. For a multi-modality machine-learning model, the input to the HAR machine-learning model is based on multiple sensor modalities. Hereinafter, for sake of simplicity, it is assumed that the HAR machine-learning model operates based on a single sensor modality.

Various aspects specifically relate to techniques for enabling the training of the HAR machine-learning model. When training the HAR machine-learning model, the weights of the HAR machine-learning model are set. This is based on a training dataset that includes input-output data pairs. The input is the sensor data; the output is a label constituting a ground truth for the expected model output based on the input.

In particular, various aspects are concerned with generating and storing training samples in a training dataset for training the HAR machine-learning model. Each training sample includes the input-output data pair, where the input comprises the sensor data obtained from one or more sensor modalities, and the output is a label associated with the input.

The label is indicative of an activity of the human body or body parts and can be considered as ground truth for the sensor data. Depending on the specific HAR task to be solved by the HAR machine-learning model, the label can take different forms.

For a binary detection task, the label may be a positive label, i.e., indicative of a certain activity being present in the sensor data; or may be a negative label, i.e., indicative of the certain activity being absent in the sensor data. For instance, the label may be a class label that is indicative of a class of the activity of the human body or body part; that class may be selected from multiple classes. For example, in gesture detection, the label may specify "gesture present" or "gesture not present", or more specifically, "hand gesture" and "no hand gesture". In gesture classification, the label may specify the particular class of the gesture, such as "swipe right", "swipe left", or "circular finger motion". Another example is fall detection, where the label may specify "fall" or "no fall", thereby discriminating between two possible human activities. Yet another example is the detection of healthy versus unhealthy seating posture, where the label may specify "healthy seating posture" and "unhealthy seating posture".

According to various techniques, labels are generated based on additional data available during the training phase, but later on unavailable during the inference phase. Vision sensor modalities can be used to generate the labels. Labels may be generated based on video data. Labels can be automatically generated based on the video data, thereby enabling unsupervised or semi-supervised learning of the machine-learning model.

According to various examples, based on video data that depicts a human body or body part during a certain time interval, a time-resolved reduced graph representation of the human body or body part is generated. Then, using one or more machine-learning models that operate based on the time-resolved reduced graph representation, the label associated with an activity of the human body or body part is generated. The activity takes place during the time interval. It may span across the entirety of the time interval or may be limited to a fraction of the time interval.

Furthermore, sensor data is obtained. The sensor data observes the human body or body part during the time interval. The sensor data is obtained with the sensor providing the sensor modality ultimately used by the HAR machine-learning model during inference. The sensor modality of the sensor is different than the vision modality used for acquiring the video data.

Furthermore, the sensor data can be acquired using a deployment configuration of the sensor later on expected during inference. For instance, a distance between the sensor and the human body or human body part may mimic the distance between the sensor later on experienced upon deploying the HAR machine-learning model, during inference. As a further example, the sensor type of sensor operating parameters used for acquiring the sensor data may mimic the sensor type or sensor operating parameter later on used by the HAR machine-learning model during inference.

These one or more machine-learning models that generate the label are, hereinafter, referred to as label-generation (LG) machine-learning models. Then, the label can be stored in the training dataset for training the HAR machine-learning model.

According to various examples, the LG machine-learning model operates on an input that is obtained by further pre-processing the video data.

According to various examples, a time-resolved graph representation of the human body or body part is generated based on the video data. The time-resolved reduced graph representation can reduce the complexity of the video data, e.g., by removing background and/or focusing on key points of the human body or body part. This renders the generation of the label more accurate, e.g., if compared to reference implementations in which the LG machine-learning model operates on the video data directly. False label predictions can be avoided. This, in turn renders the HAR machine-learning model that is subsequently trained based on the respective training dataset more accurate.

Furthermore, the video data can be anonymized by generating the time-resolved reduced graph representation. By retaining, e.g., only key-points of the anatomy of the human body or body part, individual personal features of the human are removed. Based on the anonymized time-resolved reduced graph representation of the human body a body part, remote measurement campaigns are enabled. For instance, field data may be acquired and anonymized at the field device, before transmitting the time-resolve produced graph representation. The original video data may be discarded. Federated learning becomes possible where multiple field devices report the anonymized time-resolved reduced graph representation of the human body a body part to a server that then implements the automated label generation and training.

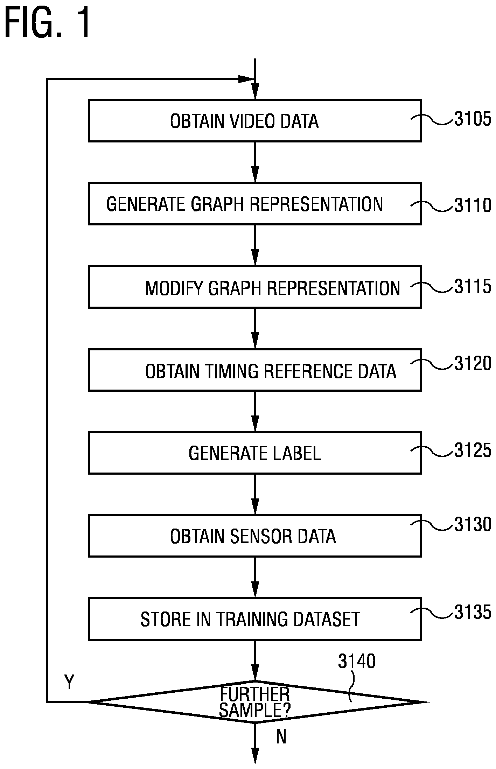

FIG. 1 is a flowchart of a method according to various examples. The method of FIG. 1 can be implemented by a processing device. More specifically, the method of FIG. 1 can be implemented by a processor, upon loading program code from a memory and upon executing the program code. The method of FIG. 1 generally pertains to populating a training dataset that is used for training and HAR machine-learning model, to enable the HAR machine-learning model to carry out a certain HAR task, e.g., gesture detection, gesture classification, fall detection, seating posture monitoring, etc. More specifically, the method of FIG. 1 pertains to automated label generation.

At box 3105, video data is obtained. The video data depicts a human body or body part during a certain time interval. The video data may depict a scene in which a human is located. The human may be fully or partly visible. The video data may be acquired using a camera. The video data may include multiple color channels. The video data may be obtained from a database. The video data may be obtained from a video repository. The video data may include multiple frames. Each frame can correspond to a still image of the human body or body part. By including multiple frames, the video data depicts the time-dependent behavior of the human body or body part, i.e., the activity, during the corresponding time interval.

At box 3110, a time-resolved reduced graph representation of the human body or body part is generated. This is based on the video data. The time-resolved reduced graph representation is indicative of a time-sequence of graphs, each graph of the time sequence including multiple edges associated with key-points of the anatomy of the human body or body part depicted in the video data. The key-points are sometimes labeled "landmarks".

The time-resolved reduced graph representation is determined for the time interval.

The key-points are in a certain relationship to each other, defined by the human anatomy - hence, a "graph" representation.

Scene background, textures, colors etc. are removed; hence it is a "reduced" representation.

Example the key-points include nose, eyes (left/right), ears (left/right), mouth, shoulder, elbow, wrist, index knuckle, thumb knuckle, hip, knee, ankle, heels, foot index.

For instance, each node of the reduced graph representation may be associated with an xy-coordinate. The xy-coordinates may be located in the image plane of the frames of the video data. Each node may be optionally associated with a z-coordinate. The z-coordinate may be predicted based on a human shape model and the xy-coordinates. Thereby, depth information may be simulated.

In some scenarios, instead of predicting the z-coordinate based on the human-shape model, further sensor data may be available that provides depth information for the human body or body part during the time interval. For instance, LIDAR or radar sensor data may be available. For instance, respective 3-D point clouds may be registered to the video data so that the video data and the further sensor data that provides depth information may be fused, thereby enabling to determine the z-coordinate for measurement.

The particular algorithm or model used for generating the time-resolved reduced graph representation of the human body a body part based on the video data is not germane for the techniques disclosed herein. In particular, prior art techniques are available that may be employed for generating the time-resolved reduced graph representation.

The time-resolved reduced graph representation of the human body or body parts may include a time-sequence of graph data structures. Each graph data structure can include nodes and edges connecting the nodes. Each node can be associated with a key point of the human body or body part. The position of each node in a two-dimensional or three-dimensional coordinate frame may be specified. For each edge, the connected nodes may be specified.

The time-resolved reduced graph representation of the human body or body part may include a time-sequence of (pixelized) key-point images. These key-point images may depict a mesh representation of the human body or body part, where nodes of the mesh are associated with key-points of the human body or body part. Such key point images may be rendered based on a graph data structure. For instance, nodes may appear as white dots in the key-point image; their size being dependent on their distance to the viewpoint of the rendering process. Edges may appear as lines in the key-point images. A normalized perspective can be chosen.

The time-resolved reduced graph representation may include multiple elements. Each element is associated with a respective point in time within the time interval covered by the video data. For instance, each element may be a respective graph data structure or a respective key-point image. Thereby, a time resolution is obtained. Instead of including multiple elements, the time-dependency may also be modeled by a functional dependency.

At optional box 3115, the graph representation that has been generated at box 3110 is optionally modified. For instance, upon generating the time-resolved reduced graph representation, one or more nodes of the time-resolved reduced graph representation of the human body or body part is discarded. For instance, certain key points that are not required for reliable HAR inference by the HAR machine-learning model are discarded.

For example, in case the target use case of the HAR machine-learning model is tracking human hand movements (e.g., for gesture detection or classification), nodes corresponding to head and shoulders key-points from the reduced graph representation can be discarded, as these are not essential for reliable hand gesture recognition. Conversely, in a use case where the target application is fall detection, it only the shoulder key-points may be retained, discarding other nodes that are not critical for detecting falls. In another scenario, if the target application is tracking fingers movements, wrist key-points may be discarded from the reduced graph representation, as these are not necessary for accurate finger movement tracking. Similarly, in a use case where the target application is tracking bad posture while sitting, only nodes corresponding to wrists and shoulders and head key-points may be retained in the reduced graph representation, as other key-points are not essential for reliable posture estimation. Furthermore, in a scenario where the target application is tracking pose during workout, all key-points including head, shoulders, elbows, wrist, may be retained in order to enable accurate pose estimation during exercise. By only retaining the use-case-relevant key-point, more robust label generation becomes possible.

As will be appreciated from the above, the one or more nodes of the time-resolved reduced graph representation may be discarded based on a predefined rule set. I.e., the particular type of the nodes to be discarded may be specified by the predefined rule set. Such predefined rule set is associated with the task that the HAR machine-learning model is configured to carry out. This means, in other words, that for different tasks, different nodes landmarking different key-points are discarded.

Another example of modifying the graph representation includes discarding the depth information of some or of each node. Such depth information may be predicted based on a human shape model. Such depth information may be relatively unreliable. Such depth information may not be particularly helpful in generating the label.

At box 3120, timing reference data is optionally received. The timing reference data may be indicative of a timing of the activity within the time interval that is covered by the video data. In other words, in some scenarios it may be that the time interval covers background, i.e., depicts the human body or body part during times at which a certain activity is not performed. The timing reference data specifies, at a higher temporal resolution if compared to the overall time interval, when the activity takes place. As a general rule, there are various options available for generating such timing reference data. For instance, it would be possible that in a laboratory set up an audio and/or visual trigger is provided to the human, to trigger performing of the activity. Then, the timing reference data may be determined based on the timing of the trigger.

At box 3125, the label is generated. The label is associated with the activity. The label can provide ground-truth information for the activity. For instance, presence or absence of the activity may be specified. The type or class of the activity may be specified.

The label is generated using one or more LG machine-learning models. At least one of the one or more LG machine-learning models may operate based on the timing reference data that may be obtained at box 3120. For instance, the timing reference data may be provided as an additional input to the LG machine-learning model(s). For instance, the timing reference data may be concatenated with the time-resolve produced graph representation. For instance, tokens may be added to each element of the time-resolve produced graph representation associated with different points in time along the time interval. These tokens may be indicative of whether the associated element is time-aligned with the activity or arranged before or after the activity.

Various options are available for implementing the one or more LG machine-learning models. For instance, a convolutional neural network may be used. The convolutional neural network may be a deep convolutional neural network including multiple hidden convolutional layers. For instance, these multiple hidden convolutional layers may be arranged in parallel. The multiple convolutional layers can each process a respective element of the time-resolve reduce graph representation. For instance, a recurrent deep neural network may be employed, e.g., a Long Short Term Memory (LSTM) network.

At box 3130, sensor data is obtained. The sensor data observes the human body or body part during the time interval covered by the video data. Thus, in other words, the sensor data and the video data observe the same scene.

The sensor data is acquired using a sensor modality that is different than the vision modality used to acquire the video data (e.g., camera). For instance, the sensor data can include intensity information. For instance, the sensor data may include a lateral resolution and additionally measured depth information. The depth information may specify distances of one or more key-points of the human body or body parts with respect to the sensor used to acquire the sensor data. For instance, the sensor data may include radar sensor data and/or ultrasound sensor data and/or time-of-flight sensor data and/or LIDAR sensor data. The sensor data may include a 3-D point cloud of the human body or body parts. The sensor modalities can encompass a wide range of devices, including microphones (for audio data), radar (for motion and distance measurement), pressure sensors (for pressure variation detection), ultrasounds (for ultrasound data), LIDAR (for distance and mapping), infrared (for heat detection and motion detection). All such sensor modalities can capture human-related features as "intensity".

Then, the input-output data pair that is formed by the sensor data as the input and the label as the output is stored, box 3135. Thus, the size of the training dataset is expanded - the training dataset is populated. The training dataset can be later on used for training the machine-learning model. The training dataset may also be used for validation of a pre-trained machine-learning model.

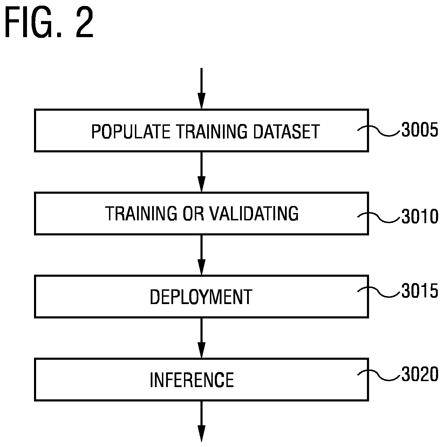

At box 3140, it is checked whether a further training sample is required to be stored in the training dataset. For instance, it may be checked whether the number of training samples already stored in the training dataset is sufficient for accurate training. In other words, the size of the training dataset is checked. In another example, whether the training dataset includes samples that sample the input space at sufficient density is checked, or whether certain areas of the input space have not yet been covered is checked. If a further training sample is required, a further iteration of box 3105 and following can be executed. Else, the method of populating the training dataset is complete. Then, training and/or validation can commence. Aspects with respect to such further downstream processing are disclosed further below in connection with FIG. 2.

Various modifications to FIG. 1 are conceivable. For instance, the various boxes can be executed in different order. For instance, first, box 3130 may be executed prior to box 3105. Furthermore, the graph representation may be generated, at box 3110, not only based on the video data, but is additionally based on further data, e.g., further sensor data based on another sensor modality than the sensor data of box 3130. In some scenarios, it would even be possible that the graph representation, at box 3110, is further determined based on the sensor data obtained at box 3130. For instance, the z-coordinate of one or more nodes may be determined based on the sensor data, e.g., if the sensor data provides depth information.

FIG. 2 is a flowchart of a method according to various examples. The method of FIG. 2 pertains to training and subsequent inference of a HAR machine-learning model. The method of FIG. 2 can be computer implemented. The method of FIG. 2 can be executed by multiple computing devices. In particular, different boxes of FIG. 2 can be executed by different computing devices.

The method commences at box 3005. At box 3005, a training dataset is populated. The training dataset is for training the HAR machine-learning model. In particular, automated label generation can be employed. Box 3005 can include executing the method according to FIG. 1.

Upon obtaining the training dataset, box 3010 may be executed. At box 3010, the HAR machine-learning model is trained based on the training dataset. The training dataset includes multiple training samples, each training sample being an input-output data pair. Training at box 3010 includes executing a machine-learning algorithm such as back-propagation for weight optimization of the weights of the HAR machine-learning model. A loss function is used to calculate a loss based on the actual output obtained from the HAR machine-learning model by processing the input of a given training sample (i.e., the sensor data) and a ground truth defined by the output of the given training sample (i.e., the label). The loss can then be minimized by using the machine-learning algorithm.

Instead of training, the training dataset may be used for validation. Here, the output of the pre-trained HAR machine-learning model obtained for a given input of a training sample can be compared against the associated label.

Upon executing the training, the trained HAR machine-learning model is then deployed at box 3015. The model can be deployed to a server or to multiple edge devices.

Then, at box 3020, inference of the pre-trained HAR machine-learning model takes place. In particular, the HAR machine-learning model carries out and HAR task, e.g., detects fall or no fall of a human, detects a certain gesture type, classifies a certain gesture type, detects unhealthy seating posture, etc. The HAR machine-learning model is inferred to determine estimates of the activities of the human body or body part.

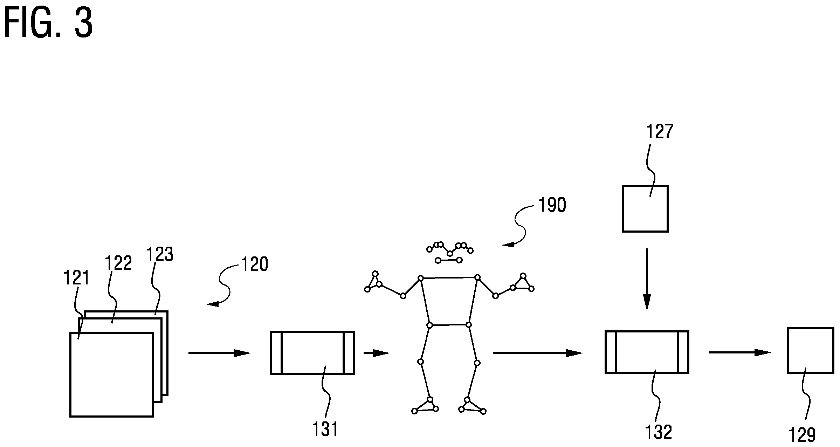

FIG. 3 schematically illustrates a processing pipeline according to various examples. Illustrated is video data 120 including multiple frames 121, 122, 123. The video data covers a certain time interval. For instance, frames can be obtained at a certain refresh rate, e.g., 20 Hz to 100 Hz, throughout the time interval.

Based on the video data 120, using a key-point extraction algorithm 131, a time-resolved reduced graph representation 190 of the human body or body part is generated. In particular, the time-resolved reduced graph representation 190 is indicative of the time-dependent positions of multiple key-points of the human body or body part (the time resolution is not illustrated in the schematic of FIG. 3) during the time interval.

For instance, the time-resolved reduced graph representation 190 may be obtained in the form of a graph data structure or in the form of a sequence of key-point images.

Optionally, the time-resolved reduced graph representation 190 is modified, e.g., by retaining only certain key-points and/or discarding certain information such as a depth information.

Aspects associated with the time-resolved reduced graph representation 190 have been previously discussed in connection with FIG. 1: box 3110 and box 3115.

Then, one or more LG machine-learning models 132 are used to generate a label 129. This label is associated with (indicative of) the activity of the human body or body parts. Details with respect to generating the label 129 have been previously discussed in connection with FIG. 1: box 3125.

The label 129 may be optionally generated taking into account timing reference data 127 that is indicative of a timing of the activity within the time interval covered by the video data 120. Respective details with respect to the timing reference data 127 have been previously discussed in connection with box 3120 in FIG. 1.

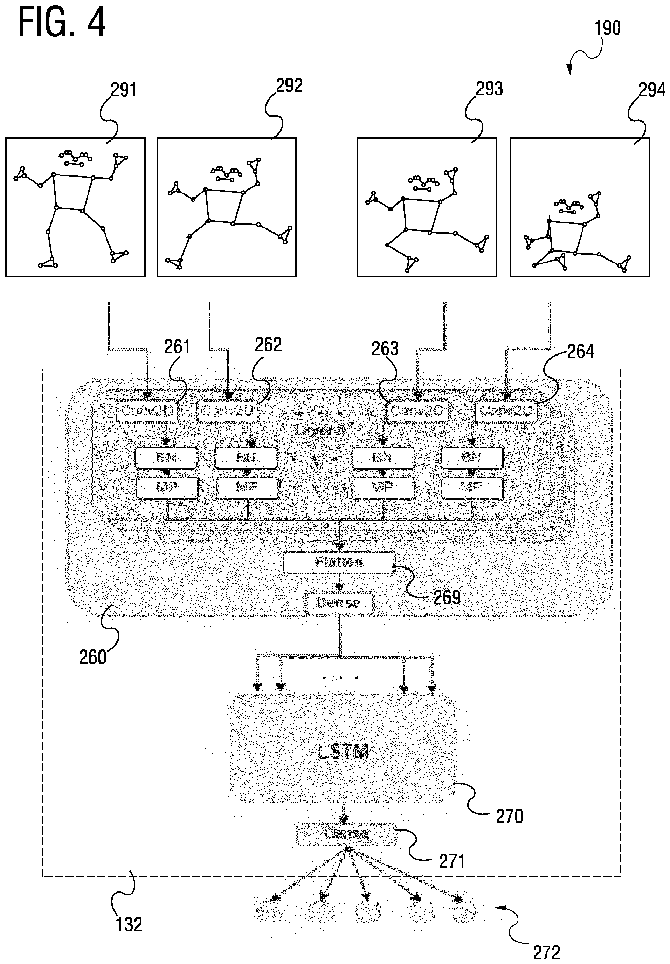

FIG. 4 schematically illustrates details with respect to the LG machine-learning model 132. The LG machine-learning model 132 includes multiple modules 260, 270, 271. In the example of FIG. 4, the multiple modules 260, 270, 271 are all trained together in an end-to-end training. However, in other scenarios, instead of using a single model including multiple modules trained end-to-end, multiple LG machine-learning models trained separately can be used.

The module 260 - a deep convolutional neural network - includes multiple parallel convolutional layers 261, 262, 263, 264, each arranged in a respective processing branch. Each of the multiple parallel convolutional layers 261, 262, 263, 264 obtains a respective element 291, 292, 293, 294 of the time-resolved reduced graph representation 190 of the human body or body part. Here, the elements 291, 292, 293, 294 are key-point images, each at a respective time point during the time interval covered by the video data. For instance, each key-point image 291, 292, 293, 294 may be associated with a certain frame of the video data. Such key-point images can use a three-color coding: black = background; white = node; gray = edge. A typical resolution would be 128x128 pixel. Other encodings are possible.

The convolutional layers 261, 262, 263, 264 are followed by batch normalization ("BN" in FIG. 4) and max pooling ("MP" in FIG. 4). A flatten layer 269 combines the output of the processing branches. A dense layer (also referred to as fully-connected layer) may follow after the flatten layer 269.

Next, a LSTM module 270 - as a form of a recurrent network structure - is used. For instance, a 16-unit LSTM architecture may be used. The LSTM module 270 enables to capture the temporal relationship between the various points in time of the time interval.

Finally, a dense layer 271 is used. For example, dense layers using between 16 and 128 neurons may be used. Each may have a dropout rate of 0.2 (regularization during training).

The output 272 is a vector indicative of the normalized probabilities that a certain activity class is present. While in FIG. 4 a 5-dimensional vector is shown, it would be possible that there is a 2-dimensional vector (e.g., "fall" - "no fall") is output.

FIG. 4 is only an example. Multiple variants are conceivable. Instead of using key-point images 291, 292, 293, 294, one may rely on graph data structures. Other types of recurrent networks may be used.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A computer-implemented method, comprising:
- obtaining (3105) video data (120) depicting a human body or body part during a time interval,
- based on the video data, generating (3110) a time-resolved reduced graph representation of the human body or body part during the time interval,
- generating (3125), using one or more machine-learning models (132, 260, 270, 271) operating based on the time-resolved reduced graph representation (190, 291, 292, 293, 294), a label (129) associated with an activity of the human body or body part during the time interval,
- obtaining (3130) a sensor data observing the human body or body part during the time interval, and
- storing (3135), in a training dataset for training a further machine-learning model, an input-output data pair comprising the sensor data as input and the label (129) as output.

2. The method of claim 1, further comprising:
- upon generating the time-resolved reduced graph representation, discarding (3115) one or more nodes of the time-resolved reduced graph representation of the human body or body part.

3. The method of claim 2,
wherein the one or more nodes of the time-resolved reduced graph representation are discarded based on a predefined ruleset,
wherein the predefined ruleset is associated with a task that the further machine-learning model is configured to carry out.

4. The method of any one of the preceding claims, further comprising:
- upon generating the time-resolved reduced graph representation, discarding (3115) depth information of each of one or more nodes of the time-resolved reduced graph representation.

5. The method of any one of the preceding claims,
wherein at least one of the one or more machine-learning models further operates based on timing reference data (127), the timing reference data (127) being indicative of a timing of the activity within the time interval.

6. The method of any one of the preceding claims,
wherein the one or more machine-learning models (132) comprise multiple convolutional layers (261, 262, 263, 264) of a deep convolutional neural network (260), each of the multiple convolutional layers (261, 262, 263, 264) processing a respective element (291, 292, 293, 294) of the time-resolved reduced graph representation (190, 291, 292, 293, 294).

7. The method of any one of the preceding claims,
wherein the one or more machine-learning models (132, 260, 270, 271) comprise a recurrent deep neural network (270).

8. The method of any one of the preceding claims,
wherein the sensor data comprises intensity information.

9. The method of any one of the preceding claims,
wherein the sensor data comprises depth information.

10. The method of any one of the preceding claims,
wherein the sensor data comprises radar sensor data.

11. The method of any one of the preceding claims,
wherein the label (129) comprises a class label indicative of a class of the activity of the human body or body part selected from multiple candidate classes.

12. The method of claim 11,
wherein the multiple candidate classes comprise at least: "hand gesture", "no hand gesture.

13. The method of claim 11,
wherein the multiple candidate classes comprise at least: "fall", "no fall.

14. The method of claim 11,
wherein the multiple candidate classes comprise at least: "healthy seating posture" and "unhealthy seating posture".

15. The method of any one of the preceding claims, further comprising:
- training (3010) or validating (3010), based on the training dataset, the further machine-learning model, and
- based on further sensor data of the same modality as the sensor data, inferring (3020) the further machine-learning model to determine estimates indicative of the activities of the human body or body part.
